# EUROPEAN PATENT APPLICATION

(11) **EP 0 545 535 A1**
(43) Date of publication of application: **09.06.1993**
(21) Application number: 92309664.8
(22) Date of filing: 22.10.1992
(51) Int. Cl.: B60K 28/16

(54) **System for controlling automotive vehicle drivewheel spin**

(30) Priority: 05.12.1991 US 802598
(71) Applicant: FORD MOTOR COMPANY LIMITED, Brentwood Essex (GB); FORD-WERKE AKTIENGESELLSCHAFT, D-50725 Köln (DE); FORD FRANCE S. A., F-92506 Rueil-Malmaison Cédex (FR)
(72) Inventor: Hoard, John William, Livonia, Michigan 48154 (US); Hrovat, Davorin David, Dearborn, Michigan 48124 (US); Lorusso, Julian Anthony, Grosse Ile, Michigan 48138 (US)
(74) Representative: Messulam, Alec Moses

(57) **Abstract**

A system for controlling unwanted drivewheel spin with an automotive vehicle powered by an internal combustion engine (10) includes sensors (22) for measuring the relative velocity of at least one drivewheel (18) with respect to the ground speed of the vehicle, and an engine valve controller (14,16,24) for limiting the engine's torque output if the measured relative velocity exceeds a threshold value.

## Description

The present invention relates to a system for controlling unwanted drivewheel slip of vehicles equipped with internal combustion engines.

Automotive designers have utilized electronic engine controls for the purpose of providing increased traction by reducing engine torque in response to the spinning of driven road wheels.

U.S. 4,856,610 to Leiber et al. discloses a system for operating an air throttle, engine fuel supply and engine spark advance in response to unwanted wheel spin.

U.S. 4,513,721 to Ina et al. and U.S. 4,860,849 to Andersson et al. disclose additional systems for controlling the engine's air/fuel ratio in response to the need to control engine torque, as is the case when one or more drivewheels is slipping.

U.S. 4,919,098 to Shimada et al. discloses a system for controlling engine torque by means of spark timing control.

Known anti-wheel spin systems suffer from the following disadvantages. First, systems which utilize spark timing changes or air/fuel ratio modulation have a limited range of authority and have the capability of reducing torque by only about 30-50% before the engine is operated under misfire conditions, which are detrimental in terms of increased engine emissions. Also, in certain cases, exhaust aftertreatment catalyst durability may be adversely affected by excessive operation of the engine in a misfire condition.

Wheelspin limiting systems which rely on series throttles or control of the pressure in the intake manifold have inadequate time response characteristics because typical intake manifolds have a volume which is large in comparison with engine displacement -- typically, 0.5 to 3.0 times displacement. Because engine torque output cannot be changed faster than the time constant of the manifold pressure change with such systems, the response time of the engine's torque output is compromised. By comparison, a system using intake valve throttling in the form of intake valve timing or lift control, or both, according to the present invention will allow airflow to be changed for each intake event, and this system will therefore permit rapid response to wheelspin. And, intake manifold pressure may be controlled so as to be close to atmospheric pressure, so as to minimize engine pumping work losses.

A system embodying the present invention offers an advantage insofar as it will use less fuel during transient load control modes.

A system embodying the present invention is advantageous because exhaust emissions during torque control will be reduced.

A further advantage of the system embodying the present invention is the elimination of the need to use brake controls, which are employed in some traction enhancement or wheelspin prevention systems.

A system for controlling unwanted drivewheel spin in an automotive vehicle powered by an internal combustion engine, having a plurality of intake and exhaust valves includes sensor means for measuring the relative velocity of at least one drivewheel with respect to the ground speed of the vehicle, comparator means for comparing the measured relative velocity of the drivewheel to a threshold value and for generating a wheelslip signal in the event that the threshold is exceeded, and torque modulation means, responsive to said wheelslip signal, for modulating the output torque of the engine with the torque modulation means comprising actuator means for operating the engine valves. The means for operating valves of the engine preferably comprises a plurality of hydraulically powered actuators, with at least one such actuator operatively associated with each engine valve, with the actuator means further comprising a source of hydraulic power coupled to a hydraulic circuit operated by the torque modulation means for supplying pressurized hydraulic fluid to the hydraulic actuators. The torque modulation means may additionally be responsive to the speed of the engine and to the position of a throttle associated with the engine. Further, the torque modulation means may be responsive to the charge air pressure within an intake manifold associated with the engine.

The actuator means for operating the valves of the engine may utilize a source of hydraulic power comprising an engine driven pump coupled to a hydraulic actuator by means of a hydraulic circuit, including a solenoid valve mechanism, which is operated by the torque modulation means. Alternatively, the actuator means may comprise an electromechanical device of the type disclosed in U.S. 4,515,343 to Pischinger, et al., which is hereby incorporated by reference into this specification. The actuator means may be operatively associated with either the intake valves, or the exhaust valves, or both sets of valves. In general, when a system according to the present invention senses that the relative rotational velocity of a drivewheel exceeds a predetermined threshold value, the torque output of the engine will be reduced until the relative rotational velocity no longer exceeds the threshold value.

The invention will now be described further by way of example, with reference to the accompanying drawings, in which:
Figure 1 is a block diagram of a system incorporated in a vehicle having an internal combustion engine according to the present invention.
Figure 2 is a schematic representation of a hydraulic actuation means for operating an intake valve according to one aspect of the present invention.
Figure 3 is a second type of hydraulic actuation means used for operating an engine valve according to the present invention.

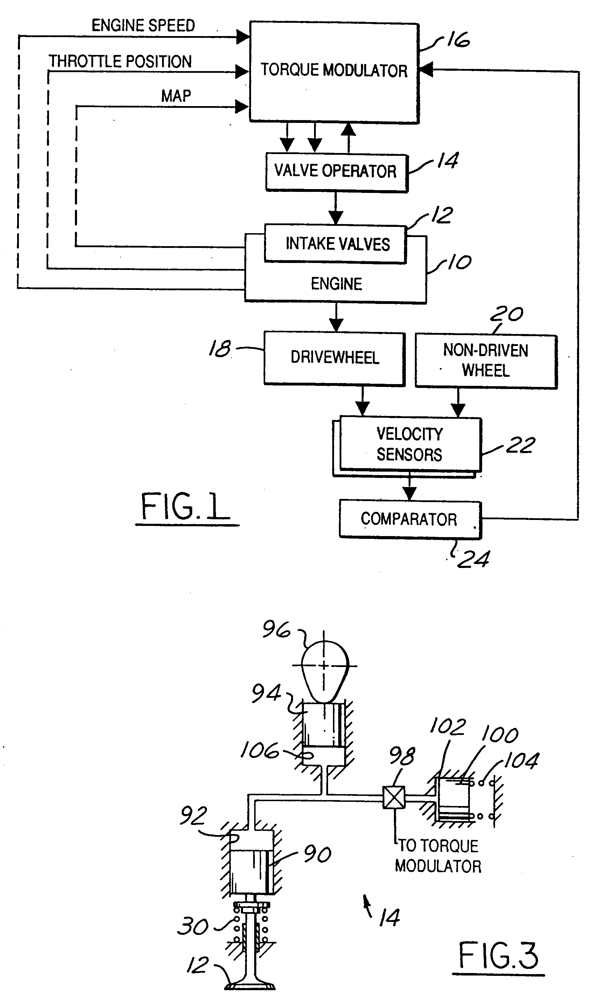

As shown in Figure 1, an engine, 10, having at least one drivewheel, 18, driven thereby, is incorporated in a system for controlling unwanted slip of the drivewheel. A system according to the present invention may be used with vehicles having multiple powered wheels and having multicylinder engines with a plurality of intake and exhaust valves. Other elements of the present system include a torque modulator, 16, which may receive inputs from the engine in terms of engine speed, throttle position, and charge air pressure or mass airflow (labeled collectively as "MAP" in Figure 1) within the engine's intake manifold. The engine speed, throttle position, manifold pressure and mass airflow inputs are optional. Torque modulator 16 also receives input from a comparator, 24. Torque modulator 16 serves as the system controller.

When a vehicle having a system according to the present invention is operated under road conditions which cause drivewheel 18 to slip, the relative velocity of drivewheel 18 with respect to the ground speed of the vehicle, will increase. Viewed another way, the rotational velocity of the drivewheel with respect to the rotational velocity of non-driven wheel, 20, will increase. The velocities of the drivewheel and non-driven wheel are measured by velocity sensors, 22, which may comprise pulse wheel sensors, Hall Effect sensors, or other types of sensors known to those skilled in the art and suggested by this disclosure, such as those used for anti-lock brake systems. Those skilled in the art will further appreciate in view of this disclosure that ground speed could be measured with ultrasonic or microwave devices, as an alternative to monitoring the speed of one or more undriven wheels.

Comparator 24 compares the sensed velocity of drivewheel 18 with the sensed velocity of non-driven wheel 20, as determined by sensors 22, and in the event that the a threshold value is exceeded, comparator 24 generates a wheel slip signal and sends that signal to torque modulator 16. Those skilled in the art will appreciate in view of this disclosure that torque modulator 16 and comparator 24, as well as other electronic components of the present system, may be combined in a single microprocessor computer in the manner of current engine controls and anti-lock braking controls.

Upon receipt of the wheel slip signal, torque modulator 16 will command valve operator 14 to reduce the torque output of engine 10. Valve operator 14 may accomplish this by operating the intake valves in a manner so as to induct less intake charge into engine 10. This will have the direct result of reducing the torque output of the engine. Although control of the intake valves is preferred, the valve operator may be applied to only the exhaust valves of the engine, so as to limit the torque output of engine 10 by opening the exhaust valves earlier or later than would otherwise be the case. Torque modulator 16 may use a proportional control algorithm, or a proportional-integral-derivative algorithm, or yet other types of algorithms known to those skilled in the art and suggested by this disclosure.

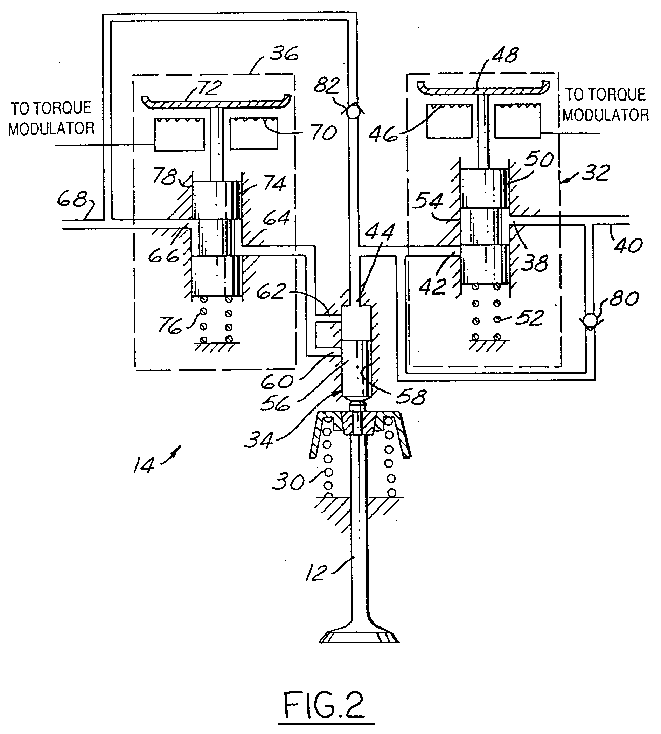

Figure 2 illustrates a first embodiment of valve operator 14. As shown in Figure 2, an engine valve, 12, which is an intake valve in this case, is biased into the closed position by means of a valve spring, 30. The valve is opened by means of a hydraulically powered linear actuator, 34. It should be understood that an engine using a system according to the present invention will have at least one hydraulically or electromagnetically powered inlet or exhaust valve for each engine cylinder. Hydraulic actuator 34 includes a piston, 56, mounted for reciprocation within a cylinder, 58. Hydraulic fluid is provided to cylinder 58 by means of a supply valve, 32, and a drain valve, 36. Fluid supplied via a supply line, 40, from an engine driven pump (not shown), is metered into a fluid input port, 44, of hydraulic actuator 34 by means of a solenoid operated valve mechanism within supply valve 32, with the valve mechanism including a spool, 50, reciprocably mounted within a casing, 54, and being responsive to magnetic force of a coil, 46, which is energized by torque modulator 16, with the coil acting upon armature, 48. Note that the spool is urged into the closed position by means of spring 52. Upon receiving a signal from torque modulator 16, the hydraulic circuit, including supply valve 32, will open, allowing fluid to pass through inlet line 40 and past fluid input port 42 and spool 50, and then through outlet port 42, and into fluid input port 44 of hydraulic actuator 34. supply valve 32 is of the normally closed variety, whereas drain valve 36 is of the normally open variety. As a result, valve 12 will lift off its seat only when valve 36 is closed and valve 32 has been opened sufficiently to permit hydraulic pressure to build within cylinder 58, so as to act upon piston 56. Because inertia will cause valve 12 to continue moving even after pressure from valve 32 has been cut off, check valve 82 is provided to allow hydraulic fluid to enter cylinder 58 from hydraulic return line 68.

Valve 12 is closed by returning drain valve 36 to its normally open position, thereby allowing the pressure acting on piston 56 to decay as hydraulic fluid leaves cylinder 58 via drain outlet 60 and restricted drain outlet 62. As shown in Figure 2, drain valve 36 has a construction which mimics that of supply valve 32, except that valve 36 is of the normally open variety. Valve 36 has a spool, 74, housed within a casing, 78. spool 74 is responsive to signals from torque modulator 16, which act on armature 72 via coil 70. Fluid passing through valve 36 is introduced into casing 78 by inlet port 64, and leaves the casing by outlet port 66. As with valve 32, spool 74 is urged into its no-signal position (i.e., the open position), by means of a spring, 76.

U.S. 5,056,378 to Aimone et al., which is assigned to the assignee of the present invention, contains a description of a similar hydraulic valve actuation system for use with torque modulation means of a vehicle transmission. The '378 patent is hereby incorporated by reference in this specification, as is U.S. 4,957,074 to Weissler, II et al., which discloses yet another electronic valve control device and system for an internal combustion engine, which system is suitable for practicing the valve actuation feature according to the present invention.

Figure 3 is a schematic representation of a lost motion type of valve operator suitable for practicing the present invention. With this latter type of valve operator, valve 12, which is biased as before into a closed position by spring 30, is operated by piston 90, which is reciprocably housed within cylinder 92. Hydraulic fluid is pumped by means of a piston pump, including a piston, 94, which is reciprocably housed within a cylinder, 106, with the piston being driven by means of an engine driven cam, 96. The amount of hydraulic oil pumped by piston 94 which ultimately reaches cylinder 92, is determined by the action of solenoid valve, 98, which is controlled by torque modulator 16. When solenoid valve 98 is closed, all of the oil pumped by piston 94, less any oil leaking past pistons 90 and 94, will be transmitted to cylinder 92 and valve 12 will be opened by an amount related to the relative swept volumes of the cylinders and the displacement provided by cam 96. If, on the other hand, valve 98 is in the open position, some of the hydraulic fluid will be allowed to pass into an accumulator comprising a piston, 100, which is loaded by a spring, 104, and which is mounted reciprocably within cylinder 102.

With either of the electrohydraulic systems shown in Figures 2 and 3, or, for that matter, with an electromechanical valve operator, a system according to the present invention will control unwanted drivewheel spin of an automotive vehicle by reducing engine output torque once excessive drivewheel spin has been detected; thereafter, output torque will be maintained by torque modulator 16 in a reduced state until the undesired wheelspin is brought under control. The controlled state may be defined as a range for the relative rotational velocity of the drivewheel, such that torque modulator will maintain such velocity within a predetermined range. Alternatively, the controlled state may be defined as a threshold value for the relative rotational velocity of the drivewheel, such that torque modulator will maintain such velocity below the threshold value.

Those skilled in the art will appreciate in view of this disclosure that a system according to the present invention could be employed in combination with one or more other types of engine output controls, such as a throttle or a brake type controller. In such case, the present system could be employed to achieve a fast response to changing vehicle operating conditions, such as variable road surface coefficients of friction.While the best modes for carrying out the invention have been described in detail, those familiar with the arts to which this invention relates will recognize alternative designs and embodiments for practicing the invention. Thus, the above-described preferred embodiment is intended to be illustrative of the invention, which may be modified within the scope of the following claims. An example of a modification which would come within the scope of the following claims would be the substitution of a electromechanical actuation scheme using solenoid-driven engine valves in a system for limiting drivewheel spin according to the present invention.

## Claims

1. A system for controlling unwanted drivewheel spin with an automotive vehicle powered by an internal combustion engine having a plurality of intake and exhaust valves, said system comprising:
sensor means (22) for measuring the relative velocity of at least one drivewheel (18) with respect to the ground speed of the vehicle;
comparator means (24) for comparing the measured relative velocity of the drivewheel to a threshold value and for generating a wheel slip signal in the event that the threshold is exceeded; and
torque modulation means (16), responsive to said wheel slip signal, for modulating the output torque of said engine, with said torque modulation means comprising control and actuator means (14,34) for operating at least some of said engine valves (12).

2. A system according to Claim 1, wherein said actuator means for operating the valves of said engine comprises a plurality of hydraulically powered linear actuators, with at least one such linear actuator operatively associated with each intake valve, with said actuator means further comprising a source of hydraulic power coupled to a hydraulic circuit operated by said torque modulation means for supplying pressurized hydraulic fluid to said linear actuators.

3. A system according to Claim 2, wherein said actuator means further comprises one such linear actuator operatively associated with each exhaust valve.

4. A system according to Claim 1, wherein said torque modulation means is responsive to not only said wheel slip signal, but also to the speed of the engine.

5. A system according to Claim 1, wherein said torque modulation means is responsive to not only said wheel slip signal, but also to the position of a throttle associated with said engine.

6. A system according to Claim 1, wherein said torque modulation means is responsive to not only said wheel slip signal, but also to the charge air pressure within an intake manifold associated with said engine.

7. A system according to Claim 1, wherein said actuator means for operating the intake valves of said engine comprises a plurality of hydraulically powered linear actuators, with at least one such actuator operatively associated with each intake valve, with said actuator means further comprising a source of hydraulic power, and a hydraulic circuit operated by said control means, for supplying pressurized hydraulic fluid to said linear actuators, with said source of hydraulic power comprising an engine driven pump, and further with said hydraulic circuit comprising a solenoid valve mechanism, operated by said torque modulation means, for selectively connecting the output of said pump with said linear actuators.

8. A system according to Claim 1, wherein said sensor means measures the relative rotational velocity of at least one drivewheel with respect to the rotational velocity of at least one non-driven wheel.

9. A system according to Claim 8, wherein the torque output of the engine is reduced in response to said wheel slip signal until said relative rotational velocity no longer exceeds said threshold value.

10. A system for controlling unwanted drivewheel spin with an automotive vehicle powered by an internal combustion engine having a plurality of intake valves, said system comprising:
sensor means for measuring the relative rotational velocity of at least one drivewheel with respect to the rotational velocity of at least one non-driven wheel;
comparator means for comparing the measured relative rotational velocity of the drivewheel to a predetermined range and for generating a wheel slip signal in the event that said relative rotational velocity falls outside said predetermined range; and
torque modulation means, responsive to said wheel slip signal, for modulating the output torque of said engine, with said torque modulation means comprising electrohydraulic actuation means for operating the intake valves.

11. A system according to Claim 10, wherein the torque output of the engine is controlled in response to said wheel slip signal such that said relative rotational velocity is maintained within said predetermined range.

12. A system for controlling unwanted drivewheel spin with an automotive vehicle powered by an internal combustion engine having a plurality of intake valves, said system comprising:
sensor means for measuring the relative velocity of at least one drivewheel with respect to the ground speed of the vehicle;
comparator means for comparing the measured relative velocity of the drivewheel to a threshold value and for generating a wheel slip signal in the event that the threshold is exceeded; and
torque modulation means, responsive to said wheel slip signal, for modulating the output torque of said engine, with said torque modulation means comprising control and actuator means for operating the intake valves.
